Europäisches Patentamt

(19) European Patent Office

Office européen des brevets

(11)  EP 0 482 037 B1

# (12) EUROPEAN PATENT SPECIFICATION

(45) Date of publication and mention
of the grant of the patent:
**26.06.1996 Bulletin 1996/26**

(21) Application number: **90910615.5**

(22) Date of filing: **11.07.1990**

(51) Int. Cl.⁶: **B29D 23/20**, B29C 45/00,
B29C 45/13

(86) International application number:
**PCT/DK90/00182**

(87) International publication number:
**WO 91/01213 (07.02.1991 Gazette 1991/04)**

(54) **PROCEDURE AND MACHINERY FOR THE PRODUCTION OF AN ASSEMBLED OBJECT**

VERFAHREN UND VORRICHTUNG ZUR HERSTELLUNG EINES ZUSAMMENGEBAUTEN
GEGENSTANDES

PROCEDE ET APPAREIL DE FABRICATION D'UN OBJET ASSEMBLE

(84) Designated Contracting States:
**AT BE CH DE ES FR GB IT LI NL SE**

(30) Priority: **14.07.1989 DK 3490/89**

(43) Date of publication of application:
**29.04.1992 Bulletin 1992/18**

(73) Proprietor: **GRAM, Jes Tougaard
DK-3460 Birkerod (DK)**

(72) Inventor: **GRAM, Jes Tougaard
DK-3460 Birkerod (DK)**

(56) References cited:
EP-A- 0 073 356          DE-B- 1 162 068
DE-B- 1 163 527          DK-C- 0 083 058
GB-A- 1 010 541          US-A- 4 518 554

• PATENT ABSTRACTS OF JAPAN, Vol 8, No 69,
M286, Abstract of JP 58-215324, publ 1983-12-14
(TAKEUCHI PRESS KOGYO K.K.)

## Description

FIELD OF INVENTION

The invention concerns a procedure to cast an assembled object where each separate part is intended especially for a repeated separating and assembling by means of hands only, such as a plastic tube with its matching cap. The invention also concerns a machine for the performance of this as mentioned in the introduction in claim 1, and a machine for the performance of this procedure.

DISCUSSION OF PRIOR ART

There are a number of known methods of producing assembled objects, which are meant for a repeated separation and assembling like a tube and its cap. But in all these cases each part is cast, either in its own separate mould, or in the same mould, but placed separately next to each other, so that the parts are not assembled into their final position until the casting and the ejection from the mould have taken place. In the case of a tube and its cap the two parts will be cast in separate moulds, each in its own material, and normally in two different casting machines. Then the cap and plastic tube have to be put together, usually in an automatic machine, before the tube is filled with its contents and sealed, just as the labelling or stamping of the tube has to be fitted into this procedure.

From EP publication No. 73356 is known a procedure for moulding of a tube with its matching cap. The procedure according to this known technique however is characterized by that the tube part is moulded first and hereafter the cap is moulded. The objective is to obtain such a tightness between cap and tube that no volatile substances can escape e.g. solubles from the contained tube material. As the cap, which is the last produced part, tightens around the tube part, this effect may be obtained. But at the same time it becomes difficult if not impossible to remove the cap from the tube by means of hands only.

SUMMARY AND OBJECT OF THE INVENTION

The method according to the invention aims at simplifying and automatizing the above procedure.

The invention concerns a method of producing an assembled object as mentioned in the characterizing part of claim 1.

By casting the parts of the object meant to be assembled in the same machine, in the same mould and practically at the same time, and by ejecting them from the mould simultaneously and assembled in the exact position which they are to have when they are used, a number of advantages are obtained, in this case exemplified by a plastic tube and its matching cap:
As the cap is cast in its proper place on the tube before the ejection from the mould, and thus does not need to be placed on the tube after the casting, considerable economies are obtained in time, storage capacity, and possible complications when placing the cap correctly on the tube. As the tube is made in the mould with the cap mounted, there is also the possibility that the tube can be filled with its contents and sealed then and there, before it is ejected from the mould with its cap correctly mounted. This means that the whole procedure, from the casting of the tube until the ejection of the filled, sealed and purposefully also stamped tube, can be made as a unity in one machine. This will result in a cheaper, simpler, and improved as well as sterile way of producing materials in tubes. And to such a degree that it may create new and better outlets for this type of products.

A specially suitable production procedure for assembled objects according to the invention is that the part of the object which, in the mutual boundary surface, is placed on the outside in relation to another part of the object, will be cast first. When the first cast part has assumed its final shape, it can serve as an independant moulding part at the production of the other part(s) of the object.

The advantages of the production being made in this order is that when the outer part, in this case the cap, is cooled down after the casting, it will shrink to smaller dimensions both on the outside and the inside as the thermal coefficient 'a' of expansion is positive in the term: $L_T = L_t (1 + {}_a(T\text{-}t))$ . The other part of the object, in this case the tube itself, is cast immediately after this in the same mould with its top inside the cap, possibly only after the injection of a parting agent, e.g. silicon spray. When the top of the tube now cools down, it will shrink inside the cap and thus create a very small, but noticeable distance to the cap everywhere, which will ease the unscrewing of the cap when used and the later repeated unscrewings and screwings on.

The injection of a silicon spray or other parting agents may be spared completely if the material of the cap is different from the material of the tube in such a way that they are not welded together, but on the contrary repel each other. The material for the cap can thus suitably have a softnening temperature range which is noticeably higher than the temperature where the material for the tube itself is cast, so that sticking together is avoided.

It should be noted that as the cap is cast first, it can contribute to the fixing of the core of the tube in its right place in the mould, as the core would otherwise easily be shifted to one of the sides when the tube materialed is injected into the mould. This ensures a uniform thickness of the walls of the tube, which can thus be made thinner saving both material and cooling time.

This can e.g. be obtained by at least one of the core parts remains standing in the top, while at least one of the other core parts having a larger diameter than the rest of the core, which enables the walls of the tube to be made thinner, when this core part is drawn out, and thus stretches the material in the wall of the tube thinner and longer.

BRIEF DESCRIPTION OF THE DRAWING

The more detailed advantages and presentation of the invention will appear from the drawing and the description.

Fig.1 gives a sectional view of a tube with mounted cap
Fig.2 shows a mould for production of both cap and tube
Fig.3 shows same in a different position, and
Fig.4 shows same in a third position.

DESCRIPTION OF THE PREFERRED EMBODIMENTS

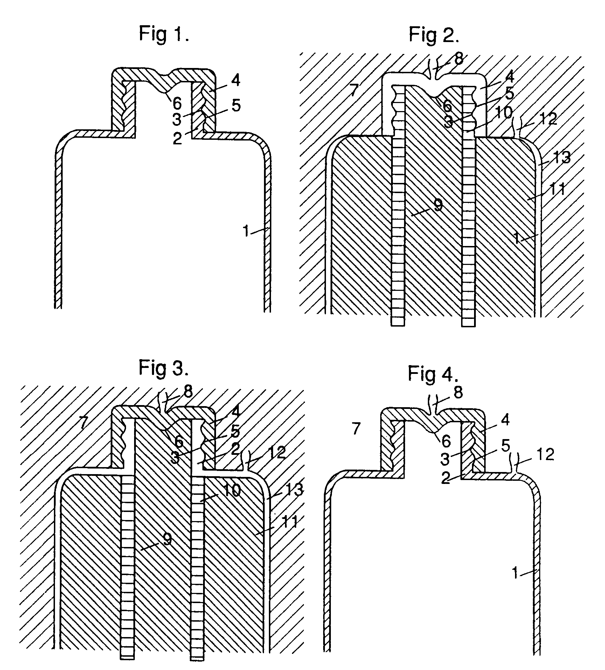

Fig. 1 shows the upper part of a tube 1, whose top 2 has walls so thick that it can hold the thread 3, by means of which it can secure a matching cap 4. The cap 4 has its own thread 5 and a downwards pointed protuberance 6, which may be used to secure the core during the casting.

Fig. 2 shows a mould 7 for the production of both the tube 1 and its matching cap 4. In the mould 7, which forms the outer limit of the cap 4, there is an inlet 8 for plastic material for the cap 4. The inner limit of the cap 4 is defined by a system of suitably concentric core parts consisting of stick 9 at the centre, which has been suitably placed in the middle of the tube 1 and the cap 4. Around the stick 9 there is a pipe-shaped core part 10, which at the top has been designed to form the thread 5 of the cap and the protuberation 6 of the cap. On the outside of this pipe-shaped core part 10 there is the outermost pipe-shaped core part 11, which on fig. 2 is in the uppermost position and hereby forms the limit of the lowest surface of the cap 4. In the shown position injection of the material for the cap can take place through the inlet 8, and almost at the same time the injection of the material for the tube can suitably be started through another inlet 12 into the tube pipe 13 at an adjusted speed. When the material in the cap 4 has hardened satisfactorily, the tube pipe 10 is drawn downwards and out of the cap 4, which is held in place in the mould 7 by the outermost pipe-shaped core part 11 during this procedure. At the same time a parting agent, silicon spray, may be injected on the inside of the cap 4, e.g. through a nozzle in the central stick 9 (not shown on the drawing). Now the outermost core part 11 is drawn downwards and a little away from the cap 4, thus allowing the tube material to flow into the top 2. The thus obtained placing of the mould's parts is shown in fig. 3.

Fig. 3 shows the placing of the three parts 9, 10 and 11 of the core during the finishing of the casting of the tube pipe 13 and the top 2, the finished cap 4 now serving as a mould, while the protuberation 6 fixes the stick 9, so that the core is not shifted to one of the sides, to ensure a uniform and small wall thickness of the tube. When the tube material has hardened satisfactorily, all the core parts 9, 10 and 11 are drawn out of the tube, but possibly not till the mould has been opened, e.g. in the cross section shown on the drawing, whereafter the tube can be stamped or a label stuck on by a fairly simple automatic procedure, which has not been shown on the drawing.

Fig. 4 shows the uppermost part of the empty tube 1 still placed in the mould 7, but all the core parts 9, 10 and 11 have been removed. The tube can now be filled with its contents, e.g. through a connecting piece mounted at the bottom, but not shown on the drawing, and there may also be a suitable welding mechanism at the bottom, not shown on the drawing, that can seal the tube after the filling. Now the completely finished tube with imprint and contents is ready to be ejected from the mould.

Besides the examples shown on the drawing there may be other ways of conducting the procedure according to the invention and the machine for the production of an assembled object. As an example of this the use of sandwich moulds can be mentioned, as well as a special rotation principle.

For this last variation of the production method an injection moulding machine may be used, where the fixed part and the movable part can be turned, in proportion to each other, around an axis placed centrally in the movable part's direction of travel. Only one part needs to be able to turn, just as the turning capacity can possibly and more suitably be built into one of the moulding parts. The gradual turning, which is suitably made in the same direction all the time, may have the following stages:

First the cap is cast, e.g. in the stationary part, while the movable part has a protruding core, which forms the inside of the cap. The movable part is now drawn away from the fixed part so that the core goes clear, while the cap remains in the fixed part.

The movable part is now turned until the tube mould with its core is outside the cap, which serves as a mould for the tube when the two moulding parts are brought together, possibly after a parting agent has been applied.

Then the tube is cast, the core is drawn out, and the tube is moved to the next position, where for instance the text may be imprinted. However, the printing may take place before the core has been drawn out. At the next position the tube can be filled, at the next position it can be sealed, e.g. by welding, and at the last position the now finished, filled and sealed tube is ejected from the mould, which now moves forward and repeats the procedure.

The above rotation principle may also take place in a different way, e.g. by having several procedures at the same stage.

**Claims**

1. Procedure to cast an assembled object consisting of at least two separable parts (1) and (4) , which are ejected from their common mould (7) at the same time and joined together in their final positions, and where the separable parts (1, 4) are intended especially for a repeated separating and assembling by means of hands only, such as a plastic tube (1) with top (2) and with matching cap (4), **characterized** by the fact, that the part of the assembled object (4) which in the mutual boundary surface has been placed outermost in relation to the other part (2) of the object is moulded/cast first, and having assumed its final shape it serves as the outer mold part (which means the she-part) in the mutual boundary surface for the production of at least one of the other parts of the object (1).

2.  Procedure for the production of an assembled object as mentioned in claim 1, **characterized** by the fact that the first cast part (4) can be used to secure a core (9, 10, 11), possibly by the first cast part having a protuberance (6) or similar.

3.  Procedure for the production of an assembled object as mentioned in claim 1 and/or 2 **characterized** by the fact that a core part (11) can be placed in such a way during the casting that the casting of the other part (1) of the object takes place in at least two stages, and preferably in the most thin-walled area.

4.  Procedure for the production of an assembled object as mentioned in claim 1 and/or 2 and/or 3, **characterized** by, that the core parts (9), (10) and (11) by their mutual displacements can ensure a uniform thickness of the walls of the tube, which can thus be made thinner saving both material and cooling time.

5.  Machine for the production of an assembled object consisting of at least two separable parts, wherein one of these parts serves as a mouldpart during the moulding of the second part as mentioned in one or more of the claims 1 to 4, **characterized** by, that the machine contains a core for the placing in the assembled object (1, 4), which core is assembled of more than one, preferably three or more, concentrically placed and mutually movable core parts, (9), (10) and (11).

6.  Machine for the production of an assembled object consisting of at least two separable parts, wherein one of these parts serves as a mouldpart during the moulding of the second part as mentioned in one or more of the claims 1 to 4, **characterized** by, that at least one of the core parts (9) and (10) remains in the top (2), while at least one of the other core parts has a larger diameter than the rest of the core, which makes it possible that the walls of the tube can be made thinner, when this core part is drawn out, and thus stretches the material in the walls of the tube thinner and longer.

7.  Machine for the production of an assembled object consisting of at least two separable parts, wherein one of these parts serves as a mouldpart during the moulding of the second part as mentioned in one or more of the claims 1 to 4, **characterized** by, that the mould (7) for the production of the two parts (1) and (4) are equipped with mechanisms for the filling of different kinds of content in the cavity, where the core parts (9, 10 and 11) has been placed during the moulding.

8.  Machine for the production of an assembled object consisting of at least two separable parts, wherein one of these parts serves as a mouldpart during the moulding of the second part as mentioned in one or more of the claims 1 to 4, **characterized** by, that the mould (7) for the production of the two parts (1) and (4) are equipped with a mechanism for the closing of the part (1) after it is filled with its contents e.g. by welding of the bottom, and a mechanism for the ejection from the mould (7) of the now filled, assembled object.

9.  Machine for the production of an assembled object consisting of at least two separable parts, wherein one of these parts serves as a mouldpart during the moulding of the second part as mentioned in one or more of the claims 1 to 4, **characterized** by the fact, that the mould (7) is built according to a special principle of rotation with at least two stations, which enables the successive casting of the cap (4) and the tube (1), the filling, the sealing e.g. by welding of the bottom, imprinting of the tube or labelling, control etc. as well as the production of more complicated objects with more separable parts.

**Patentansprüche**

1.  Verfahren zum Gießen eines zusammengesetzten Gegenstands, der mindestens aus zwei trennbaren Teilen (1) und (4) besteht, die gleichzeitig und zusammenhängend in ihrer Endposition aus der gemeinsamen Gießform (7) ausgestoßen werden, und dessen trennbare Teile (1,4) für die wiederholte Trennung und Zusammenfügung mit den Händen allein bestimmt sind, wie zum Beispiel eine Kunststofftube (1) mit Schaft (2) und dem dazugehörigen Verschluß (4), dadurch **gekennzeichnet,** daß das Teil des zusammengesetzten Gegenstands (4), das an der gemeinsamen Grenzfläche im Verhältnis zum anderen Teil (2) des Gegenstands zu äußerst plaziert ist, zuerst geformt/gegossen wird, und nachdem es seine Endform angenommen hat als das äußere Gießformteil (das heißt als aufnehmendes Teil) an der gemeinsamen Grenzfläche zur Herstellung von mindestens einem der übrigen Teile (1) des Gegenstands dient.

2.  Verfahren zum Gießen eines zusammengesetzten Gegenstands nach Anspruch 1, dadurch **gekennzeichnet,** daß das zuerst gegossene Teil (4) zum Festhalten eines Kerns (9, 10, 11) verwendet werden kann, evtl. indem das gegossene Teil mit einer Ausstülpung (6) oder ähnlichem versehen ist.

3. Verfahren zum Gießen eines zusammengesetzten Gegenstands nach Anspruch 1 und/oder 2, dadurch **gekennzeichnet,** daß ein Kernteil (11) während des Gießens so angebracht werden kann, daß das Gießen des anderen Teils (1) des Gegenstands mindestens in zwei Stufen erfolgt, und vorzugsweise zuerst im dünnwandigen Bereich.

4. Verfahren zum Gießen eines zusammengesetzten Gegenstands nach Anspruch 1 und/oder 2 und/oder 3, dadurch **gekennzeichnet,** daß die Kernteile (9), (10) und (11) durch ihre Verschiebung zueinander eine einheitliche Wandstärke der Tube ermöglichen, die somit dünner gemacht werden kann, wodurch sowohl Material als auch Kühlzeit gespart wird.

5. Maschine zur Herstellung eines zusammengesetzten Gegenstands, der mindestens aus zwei trennbaren Teilen besteht, von denen eines dieser Teile als Formteil beim Gießen des anderen Teils dient, nach einem oder mehreren der Ansprüche 1 bis 4, dadurch **gekennzeichnet,** daß die Maschine einen Kern zur Plazierung im zusammengesetzten Gegenstand (1,4) enthält, welcher Kern aus mehr als einem, vorzugsweise aus drei oder mehr, konzentrisch angebrachten und zueinander beweglichen Kernteilen (9), (10) und (11) zusammengesetzt ist.

6. Maschine zur Herstellung eines zusammengesetzten Gegenstands, der mindestens aus zwei trennbaren Teilen besteht, von denen eines dieser Teile als Formteil beim Gießen des anderen Teils dient, nach einem oder mehreren der Ansprüche 1 bis 4, dadurch **gekennzeichnet,** daß mindestens eines der Kernteile (9) und (10) am Schaft (2) verbleibt, während mindestens eines der übrigen Kernteile einen größeren Durchmesser als der Rest des Kerns hat, wodurch ermöglicht wird, die Tubenwände dünner zu machen, wenn dieses Kernteil herausgezogen wird und so das Material der Tubenwände dünner und länger streckt.

7. Maschine zur Herstellung eines zusammengesetzten Gegenstands, der mindestens aus zwei trennbaren Teilen besteht, von denen eines dieser Teile als Formteil beim Gießen des anderen Teils dient, nach einem oder mehreren der Ansprüche 1 bis 4, dadurch **gekennzeichnet,** daß die Gießform (7) zur Herstellung der beiden Teile (1) und (4) mit Vorrichtungen zum Einfüllen von diversen Inhalten in den Hohlraum ausgerüstet ist, in dem sich die Kernteile (9), (10) und (11) während des Gießens befunden haben.

8. Maschine zur Herstellung eines zusammengesetzten Gegenstands, der mindestens aus zwei trennbaren Teilen besteht, von denen eines dieser Teile als Formteil beim Gießen des anderen Teils dient, nach einem oder mehreren der Ansprüche 1 bis 4, dadurch **gekennzeichnet,** daß die Gießform (7) zur Herstellung der beiden Teile (1) und (4) mit einer Vorrichtung zum Verschließen des Teils (1) nach Einfüllen seines Inhalts, z.B. durch Verschweißen des unteren Endes, und mit einer Vorrichtung zum Ausstoßen des jetzt gefüllten, zusammengesetzten Gegenstands aus der Gießform (7), ausgerüstet ist.

9. Maschine zur Herstellung eines zusammengesetzten Gegenstands, der mindestens aus zwei trennbaren Teilen besteht, von denen eines dieser Teile als Formteil beim Gießen des anderen Teils dient, nach einem oder mehreren der Ansprüche 1 bis 4, dadurch **gekennzeichnet,** daß die Gießform (7) nach einem besonderen Rotationsprinzip mit mindestens zwei Stationen gefertigt ist, was das sukzessive Gießen des Verschlusses (4) und der Tube (1), das Füllen, Verschließen z.B. durch Verschweißen des unteren Endes, Bedrucken der Tube oder ihre Etikettierung, Kontrolle etc. sowie die Herstellung komplizierterer Gegenstände mit mehr trennbaren Teilen ermöglicht.

**Revendications**

1. Méthode pour la coulée d'un objet assemblé composé de deux parties séparables au moins (1) et (4), qui sont éjectées simultanément de leur moule commune (7) et jointes dans leur position finale, et dont les parties séparables (1, 4) sont destinées en particulier à la séparation et à l'assemblage répétitive uniquement à l'aide des mains, telles qu'un tube de plastique (1) avec un sommet (2) et avec un capuchon y assorti (4),
**caractérisée** en ce
que la partie de l'objet assemblé (4) qui au niveau de la surface de contact commune est placée à l'extérieur par rapport à l'autre partie (2) de l'objet est moulue/coulée en premier lieu et, après avoir pris sa forme définitive, sert de partie moule extérieure (soit la partie femelle) au niveau de la surface de contact commune à la production d'au moins une des autres parties de l'objet (1).

2. Méthode pour la production d'un objet assemblé selon la revendication 1,
**caractérisée** en ce
que la partie coulée en premier lieu (4) peut servir à retenir un noyau (9, 10, 11), éventuellement en dotant la partie coulée en premier lieu d'une protubérance (6) ou similaire.

3. Méthode pour la production d'un objet assemblé selon la revendication 1 et/ou 2,

**caractérisée** en ce
qu'une partie noyau (11) peut être placée de manière pendant la coulée que la coulée de l'autre partie (1) de l'objet se fasse en deux étapes au moins, et de préférence dans la zone où la paroi est la plus mince.

4. Méthode pour la production d'un objet assemblé selon la revendication 1 et/ou 2 et/ou 3 **caractérisée** en ce que les parties noyau (9), (10) et (11), par leur déplacement mutuel peuvent servir à assurer une épaisseur uniforme des parois du tube, pour économiser ainsi de la matière aussi bien que du temps de refroidissement.

5. Appareil pour la production d'un objet assemblé composé de deux parties séparables au moins, dont l'une sert de partie moule pendant la coulée de l'autre partie selon une ou plusieurs des revendications 1 à 4, **caractérisée** en ce que l'appareil contient un noyau à placer dans l'objet assemblé (1, 4), lequel noyau se compose de plus d'une, de préférance trois ou plus de parties noyau disposées de manière concentrique et réciproquement mobiles, (9), (10) et (11).

6. Appareil pour la production d'un objet assemblé composé de deux parties séparables au moins, dont l'une sert de partie moule pendant la coulée de l'autre partie selon une ou plusieurs des revendications 1 à 4, **caractérisée** en ce qu'une des parties noyau au moins (9) et (10) reste au sommet (2), alors qu'une des parties noyau au moins est dotée d'un plus grand diamètre que les autres parties noyau, ce qui permet d'amincir l'épaisseur des parois du tube quand cette partie noyau est retirée, étirant ainsi la matière des parois du tube pour les amincir et les allonger.

7. Appareil pour la production d'un objet assemblé composé de deux parties séparables au moins, dont l'une sert de partie moule pendant la coulée de l'autre partie selon une ou plusieurs des revendications 1 à 4, **caractérisée** en ce que le moule (7) pour la production des deux parties (1) et (4) est équipé de mécanismes pour le remplissage de différents sortes de contenus dans le creux dans lequel les parties noyau (9), (10) et (11) ont été placées pendant la coulée.

8. Appareil pour la production d'un objet assemblé composé de deux parties séparables au moins, dont l'une sert de partie moule pendant la coulée de l'autre partie selon une ou plusieurs des revendications 1 à 4,

**caractérisée** en ce que le moule (7) pour la production des deux parties (1) et (4) est équipé d'un mécanisme de scellement de la partie (1) après l'avoir rempli de son contenu, par exemple sous forme d'une soudure au fond, et d'un mécanisme d'éjection du moule (7) du corps assemblé ainsi rempli.

9. Appareil pour la production d'un objet assemblé composé de deux parties séparables au moins, dont l'une sert de partie moule pendant la coulée de l'autre partie selon une ou plusieurs des revendications 1 à 4, **caractérisée** en ce que le moule (7) est conçu selon un principe de rotation spécial à deux stations au moins, permettant la coulée successive du capuchon (4) et du tube (1), le remplissage, le scellement par exemple par une soudure au fond, l'impression sur le tube ou l'étiquetage, le contrôle, etc., ainsi que la production d'objets plus compliqués dotés d'un plus grand nombre de parties séparables.

Fig 1.

Fig 2.

Fig 3.

Fig 4.